# EUROPEAN PATENT APPLICATION

(11) **EP 1 424 843 A1**
(43) Date of publication of application: **02.06.2004**
(21) Application number: 03396109.5
(22) Date of filing: 26.11.2003
(51) Int. Cl.: H04M 3/493

(54) **Multimedia directory assistance service**

(30) Priority: 27.11.2002 FI 20022101
(71) Applicant: OY Radiolinja AB, 02050 Radiolinja (FI)
(72) Inventor: Isotalo, Lauri, 00830 Helsinki (FI)
(74) Representative: Tiilikainen, Jarkko Tapio

(57) **Abstract**

The present publication discloses a directory assistance service (3), in which an enquiry is received from a customer (1) over a telephone connection and the enquiry is answered by a person. According to the invention, additional information is sent from the directory assistance service (3) to the customer (1) by means of at least one graphic message.

## Description

The present invention relates to a method, according to the preamble of Claim 1, and a system, according to the preamble of Claim 15, for a directory assistance service.

Methods and systems of this kind are used in directory assistance services, in order to provide customers with directory assistance services.

In known directory assistance services, a customer contacts the service by dialling the telephone number of the directory assistance service, for example, the number 118. The call is answered by a service agent, who receives the directory enquiry verbally. The service agent searches a number database and tells the customer verbally of the result. The number information can also be sent using a text message (SMS), if the directory enquiry has been made with the aid of a suitable mobile station. In addition to the correspondence between telephone numbers and subscriber names, enquiries concerning address information can also be made to a directory assistance service.

Besides the directory assistance service described above, there are also other ways of seeking number and address information. One way of seeking number and address information is to search a traditional telephone directory or Yellow Pages, printed on paper. These paper publications also provide private individuals and companies with the opportunity to add image content along with the lines of text. For example, in the telephone directory published by Elisa Communications Plc, it has been possible for some years now for private individuals to have their own picture added to their lines of text, for an additional charge. On the other hand, in the Yellow Pages directory, intended for commercial advertisements, photographs and drawings showing a company's location or products have already been common for some decades. A more highly developed version of this is a CD-ROM-based telephone directory, which allows the information in a telephone directory to be updated more frequently than once a year, which is the typical update interval for paper directories. The aforementioned directories have the advantage over a directory assistance service that, with the aid of these directories, customers can be given more diverse and comprehensive information, as they also permit the provision of graphic information. However, they have the drawback that the information is not as up-to-date as it is in a directory assistance service and the directory may not be at hand when the information is required. In particular, directories may not necessarily be available to users of mobile stations when they need to communicate. In addition, the price of paper publications is relatively high for those customers who rarely need number information.

Services provided over the Internet also compete with a directory assistance service provided over a telephone connection. For example, the service www.0100100.com operates in the Internet, and is a quite highly developed and rapidly updateable service for companies wishing to distribute up-to-date visual information about themselves to interested customers. The company can then always send the said Internet service their latest current information, for example, on hours of business, or contact information, so that customers of the company can receive this information directly through the service. On the other hand, this Internet service can also provide only a link to the company's website, through which customers can obtain the information they want. Services provided through the Internet are best suited to situations, in which the customer has simultaneously available both a computer connected to the Internet and a separate telephone. The use of an Internet service through a mobile station is quite slow and awkward.

In addition, the Sinulle.com service is known (www.sinulle.com), in which a text message can be used to order guide maps, to a terminal equipped with an MMS functionality. This service, however, cannot be used as a directory assistance service, has restricted coverage, and, being automatic, does not offer the flexibility of a service operated by a person.

Further, the so-called fax-on-demand service, which is based on quite old technology, is known, which permits visual information in a simple form on the service of a company to be transmitted to customer. In the service, the customer typically calls a special automatic voice service, in which they can use a voice menu to decide which of the services provided by the company they are interested in. Finally, the customer keys in the telephone number of their own fax machine. The company's fax server then sends fax pages concerning the services in question to this telephone number. This service too does not act as a directory assistance service. In addition, the service requires the ability to receive faxes, thus severely limiting its availability.

As is apparent from the above descriptions, a directory assistance service operated by a person and provided through a telephone connection still has some advantages over services provided in other ways. One significant advantage is the availability of the service independently of time and place, provided only that there is a functioning telephone connection. Another significant advantage is the fact that the service is operated by a person: a trained service employee can search databases more effectively than an end customer and can also correct errors in a customer's enquiry. Despite this, there is a need to develop the directory assistance service, in such a way that the directory assistance service would remain competitive, even when competing technologies and customers' use habits develop and change.

The invention is intended to create a new type of directory assistance service, by means of which the service ability of a directory assistance service can be improved.

The invention is based on sending the customer additional information by means of at least one graphic message in a person-operated directory assistance service implemented over a telephone connection.

More specifically, the method according to the invention is characterized by what is stated in the characterizing portion of Claim 1. The system according to the invention is, in turn, characterized by what is stated in the characterizing portion of Claim 15.

Considerable advantages are gained with the aid of the invention. With the aid of the invention, the service capability of a traditional directory assistance service can be extended considerably and the service can thus continue to be kept competitive. With the aid of the invention, a customer calling the directory assistance service can be provided with an opportunity to receive additional information also in the form of images, which in some cases will bring the customer significant additional benefits, compared to purely number and address information.

With the aid of the invention, a user of a mobile station can be provided with information on the level of the Yellow Pages, without them having to carry the Yellow Pages with them. There is also the advantage, compared to a paper publication, that the information can be kept up to date all year round.

In addition, the invention also has several preferred embodiments, by means of which important additional advantages can be achieved.

For example, the invention permits an embodiment, in which information on the state of orders in the target company, or target companies enquired about is searched in the directory assistance service and information on this is sent to the customer in a graphic message. Thus, on the basis of a call to the directory assistance service, the customer will be informed of the state of orders in the target company and will avoid unnecessary calls to companies that are unable to supply the desired service. In an embodiment further developed from this embodiment, the customer can also order their desired service or product through the directory assistance service. In an even further developed embodiment, the service or product can also be paid for through the directory assistance service.

In an embodiment of the invention, in which information on the target company's prices and services are sent to the customer along with a graphic message, the customer will be better able to select a suitable target company already directly on the basis of their call to the directory assistance service.

On the basis of the invention, it is also possible to implement a service, in which the customer is sent, on the basis of a directory assistance enquiry, an electronic form as a graphic message, with the aid of which the customer can directly place an order or booking in the system of the target company. The customer will then be able to order or book the service they seek, already on the basis of the call they have made to the directory assistance service.

With the aid of embodiments of the invention, a highly integrated solution for searching for products of companies can thus be provided. It is possible to envisage a customer being interested in, for example, various chipping hammers for hire. The directory assistance service can assist by sending the customer product descriptions of the chipping hammers of competing machine-hire firms, together with price, availability, and address information. Once the customer has decided which of the machines on offer is best for them, they can immediately contact the correct hire firm.

One additional advantage of the invention is the possibility to charge the user for the use of the service on an event basis. In this case, the user can be the customer, who calls the directory assistance service. More typically, however, the user will be the company, which now gains from the directory assistance service a new, competitive channel for providing information on its products.

The invention also gives a directory assistance service an entirely new dimension, as callers can be provided with, in addition to the previous number and name services, an opportunity to receive visual information on the person or company that is the target of the search. Thus, the familiar directory assistance service can provide callers with a considerably more comprehensive total service and can thus remain competitive even in the future.

With the aid of the invention, the user is also not restricted to using a www-service with PC equipment, but can use the service everywhere with their own cellular telephones supporting MMS technology.

In the following, the invention is examined with the aid of examples and with reference to the accompanying drawings.

Figure 1 shows one directory assistance service according to the invention.

Figure 2 shows the updating of information in one directory assistance service according to the invention.

Figure 3 shows the transmission of a graphic message in one directory assistance service according to the invention.

Figure 4 shows one directory assistance service according to the invention in greater detail.

The embodiments described in the following are based on the exploitation of so-called MMS technology and a 118-directory assistance service. The term 118-directory assistance service refers in general to a person-operated directory assistance service provided over a telephone connection and particularly to the directory assistance service provided by the Elisa Communications Group.

MMS technology (Multimedia Messaging Service) refers, in turn, to the image-message functionality of modem mobile stations. MMS technology can be used to transmit graphic, sound, and video short messages in 3^{rd} generation mobile networks. Because MMS is highly standardized and is based on open interfaces, it also allows the service to be implemented in 2^{nd} and 2.5-generation mobile networks. Users and applications in the Internet can also be easily connected to the totality.

In MMS technology, users send and receive messages using an MMS-client program, which operates in their mobile terminal or computer. Each received message is initially stored in the user's 'mailbox', from which the user can retrieve messages (the so-called 'pull-method') after being notified of an incoming message. The other alternative is to deliver the messages to the user, using the so-called 'push-method', without any action by the user. In this, it is possible to take into account the user's own preferences, the properties of the terminal, and the state of the radio network at the moment in question.

The implementation also applies 118-directory assistance technology. This permits, for instance, effective, high-quality, total-service management and event-based charging for the use of the service. If necessary, the user can also be instructed in how the service operates and how, for example, it is best to browse the MMS presentations made of a company's products. By using a terminal supporting MMS technology, it is possible to receive images of the person that is the target of the 118-service search, or of a product provided by a company.

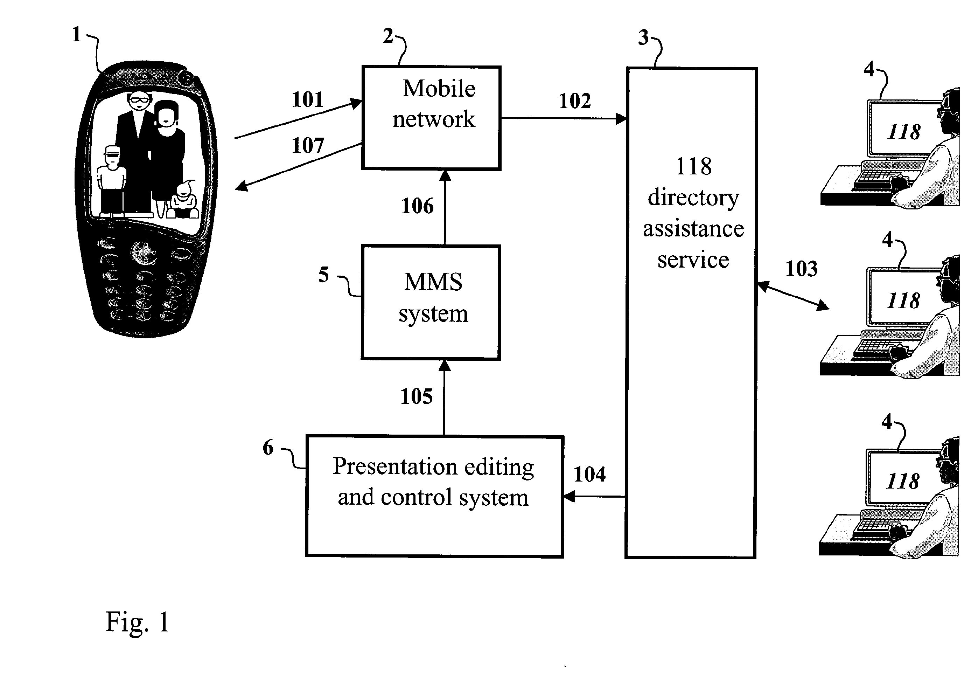

Figure 1 shows an overall view of a 118-service, in which it is possible to send additional information with the aid of graphic messages. According to Figure 1, the system components relating to the use of the service are the customer's terminal 1, a mobile network 2, and an MMS system 5 connected to the mobile network. The system components relating to the implementation of the service are a 118-directory assistance service system 3, customer-service agents 4 connected to the service system 3 through terminals, and a graphic presentation editing and control system 6, which is connected to the 118-directory assistance system 3 and which is able to communicate with the MMS system 5.

The method of Figure 1 is implemented by the joint operation of three sub-systems. The following operations are performed when using the service according to Figure 1:
- 101): If a user wishes to obtain the contact information for a private individual or company, they call the telephone number of the 118-directory assistance service (in this example, the number 118).
- 102): The call is connected, through the mobile network 2, to the 118-directory assistance service 3.
- 103): The 118-directory assistance service system 3 selects a suitable customer-service agent 4, who is free, and connects the call to this customer-service agent 4. The customer states the information search request to the customer-service agent 4. The information search request can be, at its simplest, the name of the company or private individual, spoken by the customer.
- 104): If it becomes apparent during the call that visual information is available on the private individual or company that is the object of the enquiry, and that the customer's terminal 1 supports this service, the customer-service agent 4 orders the MMS presentations control system 6 to deliver the presentation to the customer. If there are more than one presentations, the customer-service agent 4 selects one or more presentations (if necessary, all of them) to be sent. In order to select suitable presentations, the customer-service agent 4 can preview the presentations on their own terminal and ask the customer, over the telephone connection, what type of presentation the customer might be interested in.
- 105): The control system 6 sends the presentation to the MMS system 5 for transmission to the customer. The presentation is directed to the network address used by the customer's terminal 1.
- 106): The MMS system 5 forwards the presentation to the mobile network 2.
- 107): And the mobile network 2 delivers the presentation to the customer's terminal 1, which supports MMS technology.

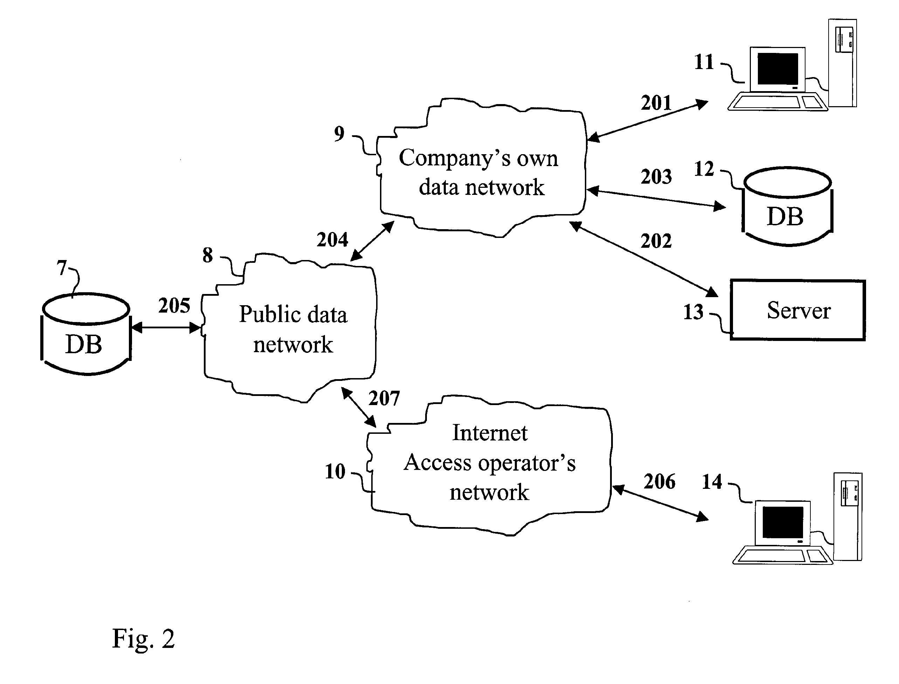

In for the 118 service to be able to deliver up-to-date graphic presentations cost-effectively, a user interface, with the aid of which companies and private individuals can create and edit graphic messages in the 118 service, is connected to the graphic-presentation editing and control system 6. The system components participating in the implementation of the control interface are shown in Figure 2. The system shown in Figure 2 includes a database 7 for storing graphic messages. The database 7 is connected to the 118-service system, typically to the editing and control system 6 shown in Figure 1. The database 7 is connected to a public data-communications network 8, for example, the Internet, through which the end user can contact the database 7. In the example of Figure 2, the end user is shown as both a private individual and a company. The control connection 14 of a private individual includes a computer, which is connected to the public data communications network 8 through the network 10 of an Internet access operator. A company's control interface 11, on the other hand, is connected to the public data communications network 8 through the company's own data communications network 9. In the example, its own database 12 and content server 13, with which the database 7 of the 118-service system can communicate, are also connected to the company's system. Thus, the 118 service can send those searching for information graphic messages, the content of which has been partly or entirely retrieved from the company's database 12 or content server 13. With the aid of such an arrangement, the content of the messages transmitted through the 118 service can be made to correspond to the realtime state of the company.

Figure 2 also shows some operations, which are performed in order to update the graphic information (or also other information) transmitted by the 118 service.
- 201): The company's control interface 11 communicates with the company's data communications network 9, for updating an application in the content server 13.
- 202): The application in the content server 13 is updated.
- 203): The information in the database 12 is also updated in a corresponding manner.

In the system of the example, it is also possible to operate in such a way that the information contained in the company's database 12 is updated to the 118 service database 7, through the company's own data communications network 9 and the public data communications network 8, as batch runs, or whenever changes are made in the database 12. A method of this kind is referred to in the procedural stages 204 and 205 of Figure 2.
- 204): Information on the changes is transmitted to the public data communications network.
- 205): And forwarded from there to the database 7.

When a private user updates the database 7, the following operations are performed:
- 206): The private user contacts the database 7, through a connection provided by an Internet access operator.
- 207): The connection is formed through the public data communications network 8.
- 205): The information is updated in the database 7.

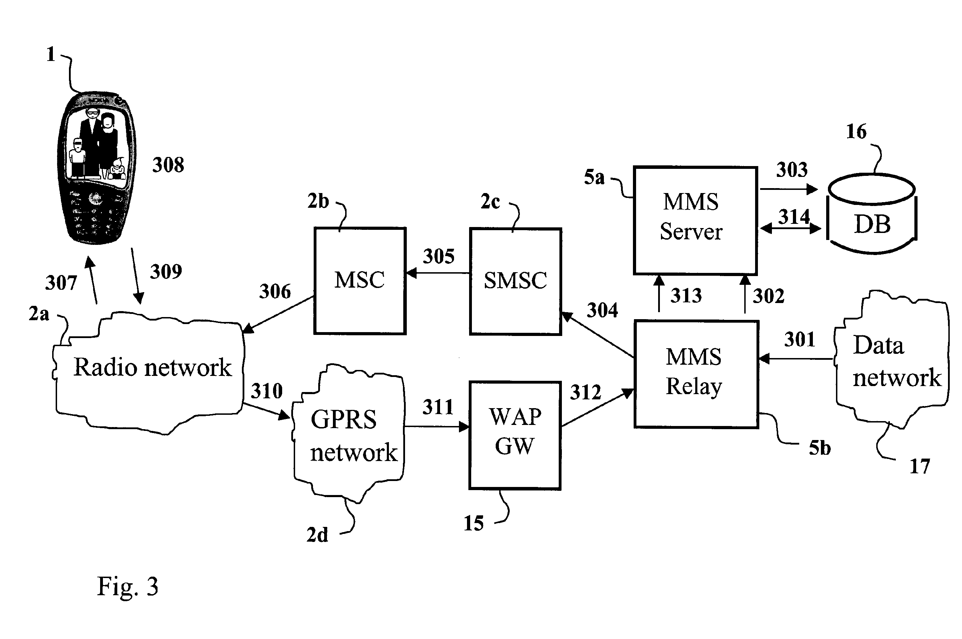

Figure 3 shows the delivery of graphic messages, which in this case are MMS presentations, to the terminal 1 of the customer. In addition to the customer's terminal, the operations are participated in by a radio network 2a, an SMSC short message service centre 2c, an MSC mobile switching centre 2b, a GPRS network 2d, a WAP gateway 15, an MMS relay 5b, an MMS server 5a, and a database 16, which is connected to the MMS server 5a. A data communications network 17, to which the MMS relay 5b is connected, also participates in the operations.

In the example of Figure 3, visual presentations are transmitted to the customer's terminal 1 in the following manner:
- 301): A presentation application used by the 118 application transmits a suitable MMS transmission through the data network 17 to the MMS Relay element 5b.
- 302): The MMS Relay 5b forwards the MMS transmission to the MMS Server element 5a.
- 303): The MMS Server 5a stores the transmission in its own database 16.
- 304): The MMS Relay 5b sends the customer's terminal 1 a notification of the MMS transmission that has arrived. The notification is sent to the SMSC short message service centre 2c.
- 305): The notification is forwarded to the MSC mobile switching centre 2b.
- 306): The notification is then forwarded to the radio network 2a.
- 307): And finally to the terminal 1.
- 308): In the customer's terminal 1, the notification initiates the activation of the application.
- 309): The application makes a connection over the radio network 2a, in order to receive the MMS transmission.
- 310): The connection is formed through the GPRS network 2d,
- 311): ... the WAP Gateway 15; ...
- 312): ... and the MMS Relay element 5b ...
- 313): ... to the MMS Server element 5a,...
- 314): ... which retrieves the MMS transmission from the database 16. The MMS transmission is transferred to the customer's terminal during the aforesaid connection and finally the customer is notified of the received MMS transmission, on the display of their terminal. This MMS transmission is typically a graphic file, containing, for example, a picture of a private individual, or providing visual information on the products of a company. Of course, other images and text can be added to the MMS transmission. In a more highly developed form, the customer can also be sent sound files, or even a video presentation.

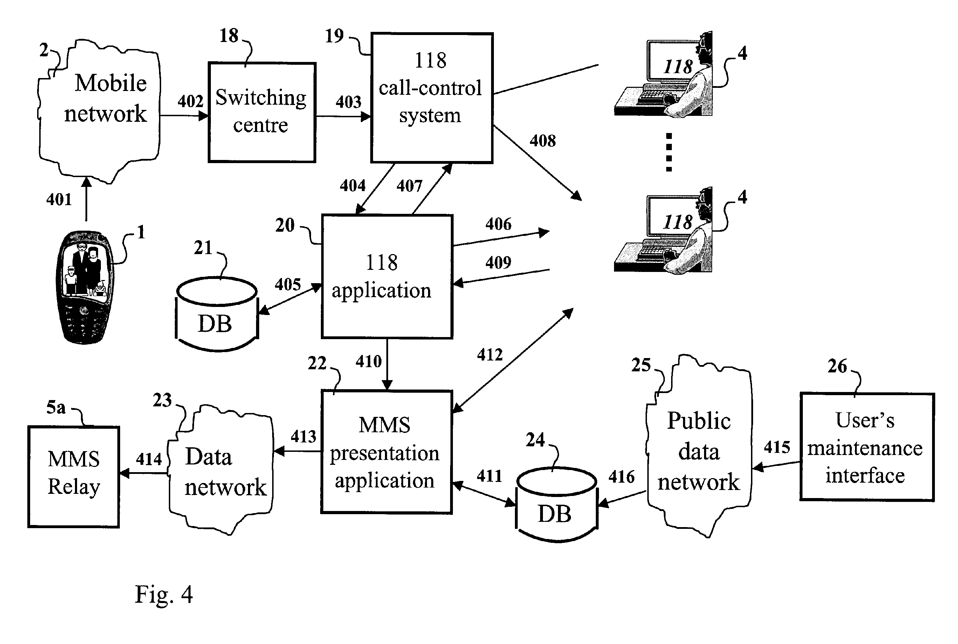

Figure 4 shows the operation and the system components participating in the operation of the 118-directory assistance service more comprehensively. These components are the customer's terminal 1, a mobile network 2, and a telephone network switching centre 18. A 118-call control system 19 and the customer service agents 4 connected to the system naturally also participate in the operation. The 118 application 20 and the application's database 21, as well as the MMS presentation application 22 are connected to the call control system 19. The MMS presentation application 22 is connected through the data network 23 to the MMS Relay element 5a and to the database 24, to which the user's maintenance connection 26 is in turn connected through the public data communications network 25.

From the point of view of the 118-directory assistance service, the method of Figure 4 operates in the following manner.
- 401): The user calls the 118-directory assistance service, using an MMS-compatible terminal 1. The connection is formed through the mobile network 2 ...
- 402): ... and the switching centre 18 ...
- 403): ... to the 118-call control system 19.
- 404): On receiving the call from the telephone network, the 118-call control system 19 initiates the 118 application 20, with the aid of which a suitable free customer-service agent 4 is sought and supplied with up-to-date information on the display of their workstation.
- 405): The 118 application 20 searches the database 21 for information on, among other things, who among the customer-service agents 4 is free and what information should be sent to their display.
- 406): The 118 application 20 selects a suitable customer-service agent 4 and sends the necessary information to the display of their workstation.
- 407): The 118 application 20 commands the 118-call control system 19 to connect the call to the selected customer-service agent 4.
- 408): The customer's call is connected to the customer-service agent 4 and the customer-service agent 4 can begin to advise the caller.
- 409): If it becomes apparent during the call, that visual information is available on the private person or company that is the object of the enquiry, and that the customer's terminal 1 supports this service, the customer-service agent 4 activates the initiation of the image-message service in the 118 application.
- 410): The 118 application 20 initiates the MMS presentation application 22.
- 411): The presentation application 22 has typically a special database 24, in which the available visual presentations are stored.
- 412): If necessary, the 118 customer-service agent 4 can check that the presentation is suitable to be sent to the customer.
- 413): The selected presentation or selected presentations are sent in MMS-format through the data communications network 23 ...
- 414): ... to the MMS Relay 5a, for forwarding to the customer's terminal 1.

According to the principles described above, it is also possible to transmit video presentations of the person, company, or association that is the object of the search. In such an application, the customer is sent a short video presentation of the object, on the basis of a search made from the 118 service. Thus, a private person, for example, can take a short video shot of themselves and store it in the database used by the 118 service. This video shot can also include a sound component, in which case the customer of the 118 service will also hear a voice greeting from the person in question.

Several useful service applications can be implemented with the aid of the systems and methods described above. In the following, some possibilities are described for producing added value in a directory assistance service.

Because the transmission of an MMS presentation from a 118 service is more expensive than that of an existing SMS, it is obvious that the price of the directory assistance service may become an obstacle to its use, if the user of the service (the customer calling the service) must pay the whole price of the service. However, in connection with the service it is possible to divide the costs between the person making the enquiry and the object of the enquiry. In some cases, this will offer attractive additional advantages to all parties. For example, an operator providing a 118 service can provide the possibility to divide the costs of the service between a company advertising in 118 and a user. For example, in the case of the machine-hire firm, the user could pay 50 % of the price of the MMS presentation, the machine-hire firm for its part paying the other 50 %. Thus the 118 operator would, for example once a month, send the machine-hire firm an invoice for the transmission of MMS messages advertising the firm to consumers enquiring about machine-hire firms. This would also allow the machine-hire firm to see how many contacts it makes through the 118-service's MMS service. In the case of a cinema, the shares could be 70 % to the user and 30 % to the cinema, as cinemas will want to transfer the costs to the user in this way. On the other hand, users could favour cinemas that offer a possibility to see where the available seats are, so that for reasons of competition it might be worthwhile for a cinema to pay part of the price of the MMS presentation. In addition, film distribution companies could also participate in the costs of the cinema, as in this way they use a ticket booking to advertise their own production.

The aforementioned machine-hire firm could maintain information on its machines for hire in the manner shown in Figure 2, in such a away that information on the machines, or at least on some of them would be available through the 118 service. If a user calls the 118 service and enquires about a machine-hire firm, the 118 customer-service agent does not search for a suitable hire firm purely on the basis of the firm's business sector, but can ask already during the telephone conversation what kind of machine the caller is interested in. Once this is known, the customer-service agent makes a search based on the up-to-date information sent by one or more suitable machine-hire firms (the information has been updated in the database 24 of Figure 4, with the aid of stages 415 and 416). At the same time, the customer-service agent sees the firms' hours of business, machine types, prices, and hire conditions. According to their ability, the customer-service agent can focus the search, but as a final result they 'construct' an MMS presentation, which is sent to the caller. This presentation can show, for example, the firm's hours of business, a map and the location of the firm, the types of machines that the caller is interested in, and their prices and availability. In the best embodiments, the customer-service agent can agree with the caller on what the MMS presentation should contain, in order for the presentation to serve the caller as well as possible.

Another example is a laundry. In this case, the caller is interested in having large carpets washed cheaply and without having to wait a long time. The caller calls the 118 service and asks for a laundry. The customer-service agent offers the possibility to focus the search, so that the caller would be able, on the basis of this telephone conversion, to know to which laundry it would be best to take the carpets. The caller says that they want four large carpets washed in water and then wants them to be dried. The caller wants to bring the carpets today and does not want to pay more than a total of 30 euros. On the basis of this, the 118-service customer-service agent makes a search and finds some alternatives. In this example, the most interesting of these is Superputsaus in the Jumbo shopping mall, because the 118 customer-service agent can also book a machine (the right time and the right type of washing machine) at that laundry. In other words, the customer-service agent can also make an alteration to the database 24 of Figure 4, from which the information is forwarded as in stages 415 and 416 (but in the opposite direction to that shown in Figure 4) to the laundry entrepreneur's own data system. As receipt for the service, the caller can receive a booking number for carpet washing and a map showing where Superputsaus is located in the Jumbo mall.

The third example is a cinema. In this example, the caller is interested in making an enquiry about a town's cinemas. The caller calls the 118 service and asks about cinemas in the town in question. The customer-service agent offers the possibility to focus the search, so that the caller would already known on the basis of this telephone conversation, what films are being shown at each cinema, what the prices are, and whether there are still seats available at a suitable time. The customer-service agent makes a more precise search in the database, in which there is up-to-date information on the films in different cinemas. The caller says that the film should be either *MadMax 8* or *Indiana Jones in the Sahara.* The customer-service agent makes a search and says that *MadMax 8* is being shown in only one cinema in town and only on Fridays, and that there are only three tickets available for seats at the left-hand side of the front row for the showing next Friday. *Indiana Jones in the Sahara,* on the other hand, is being shown in two cinemas and seats are available in both. The caller asks to see the seats available and the 118 customer-service agent sends them to the caller as an MMS presentation. The caller decides to go to Kino Trio, in which case the customer-service agent offers the possibility to reserve a ticket and also to pay for it. On the basis of the MMS image that they have received, the caller selects seat 17 in row 9 and decides to pay for the ticket in connection with this telephone call. The customer-service agent makes the booking and sends a suitable impulse burst in the caller's direction. Finally, the customer-service agent sends the seat reservation information to the caller as an MMS message. This message is sponsored by the film company. In the same message, the caller receives a discount coupon for a pizzeria associated with the cinema.

A fourth example is an image presentation as part of a 118 service. In this example, the caller is interested in finding the person named Heikki Virtanen, whom they are trying to contact. They call the 118 service and find out that there are three Heikki Virtanens in the town. The caller does not know Virtanen's address and cannot decide which of the three is the person they know. The 118 customer-service agent offers the possibility of seeing pictures of these three Heikki Virtanens, for a small additional charge. The caller agrees and the 118 customer-service agent makes a search in the database and sends a picture of each Heikki Virtanen in an MMS message. Now the caller can easily decide which one is their friend and thus the 118 customer-service agent gives information on precisely the correct Heikki Virtanen. This information is easily given to the caller together with an MMS image, in which there is an address, various telephone numbers, alternative e-mail addresses, and other information that this correct Heikki Virtanen wishes to provide about himself. The caller can also receive a family photo of the entire Virtanen family of six.

The customer can also be sent a form as an MMS message from the directory assistance service, by completing and sending which the customer can order the product or service they want, or cause some other action to be carried out. The form can be set to be returned to the directory assistance service, or, for example, directly to a target company.

The examples described above are intended to illustrate possible embodiments within the scope of the invention. The examples are not intended to restrict the scope of the protection, which is intended to cover all the embodiments defined in the Claims and other equivalent embodiments.

## Claims

1. A method in a directory assistance service, the method comprising receiving an enquiry from a customer, over a telephone connection, and answering the enquiry by a person, **characterized by** sending additional information from the directory assistance service to the customer by means of at least one graphic message.

2. A method according to Claim 1, **characterized in that** the graphic message is sent to the telephone subscription used by the customer in the telephone connection.

3. A method according to Claim 1 or 2, **characterized in that** the graphic message is sent in MMS-format.

4. A method according to any of Claims 1 - 3, **characterized in that** in the directory assistance service, at least one graphic message, according to the customer's preferences, is selected during the telephone connection, from a group of several graphic messages, and the at least one graphic message selected is sent to the customer.

5. A method according to any of Claims 1 - 4, **characterized in that** in the directory assistance service, at least one message template, according to the customer's preferences, is selected during the telephone connection, the message template is edited according to the customer's preferences, and a graphic message corresponding to the customer's requirement is thus formed and the at least one graphic message formed is sent to the customer.

6. A method according to any of Claims 1 - 5, **characterized in that** t in the directory assistance service, at least one message template, according to the customer's preferences, is selected during the telephone connection, additional information desired by the customer is retrieved from a database, a graphic message according to the customer's preferences is formed by including the retrieved information in the message template, and the at least one graphic message formed is sent to the customer.

7. A method according to any of Claims 1 - 6, **characterized in that** t in the graphic message information is presented on the target company's order situation and, after the graphic message has been sent, an order is received from the customer, and forwarded to the target company.

8. A method according to any of Claims 1 - 7, **characterized in that** the recipient is invoiced for the transmission of the graphic message.

9. A method according to any of Claims 1 - 7, **characterized in that** the party, information concerning which is sent in the graphic message, is invoiced for the transmission of the graphic message.

10. A method according to any of Claims 1 - 9, **characterized in that** both the recipient and the party, about which information is sent in the graphic message, are invoiced for the transmission of the graphic message.

11. A method according to any of Claims 1 - 10, **characterized in that** on the basis of an enquiry at least one target company is selected, the directory assistance service contacts the database of the target company, at least one piece of information is retrieved from the database, and the retrieved information is included in a graphic message to be sent to the customer.

12. A method according to any of Claims 1 - 11, **characterized in that** on the basis of an enquiry at least one target company is selected, the directory assistance service contacts the database of the target company, a selection is received from the customer, and at least one alteration, deriving from the customer's selection, is made in the database of the target company.

13. A method according to any of Claims 1 - 12, **characterized in that** a sound file or video is attached to the graphic message to be sent.

14. A method according to any of Claims 1 - 13, **characterized in that** the graphic message to be sent includes a form intended to be completed by the customer, with the aid of which the customer can place an order or carry out an action.

15. A system for a directory assistance service, which includes means for receiving calls and for making database searches relating to directory assistance, **characterized in that** it includes means for making database searches relating to additional information, means for forming and/or selecting graphic messages containing the additional information, and means for transmitting the formed and/or selected graphic messages to the customer.

16. A system according to Claim 15, **characterized in that** it includes means for forming a connection to the data system of a customer company for retrieving information from the data system and/or for making alterations in a database included in the data system.

17. A system according to Claim 15 or 16, **characterized in that** it includes a customer database for storing customer-specific additional information material, which is typically graphic material, and a control interface provided for a customer to update the customer-specific additional information material contained in the customer database.
